# EUROPÄISCHE PATENTSCHRIFT

(11) **EP 1 679 166 B1**
(45) Veröffentlichungstag und Bekanntmachung des Hinweises auf die Patenterteilung: **04.04.2012**
(21) Anmeldenummer: 06000377.9
(22) Anmeldetag: 10.01.2006
(51) Int. Cl.: B27K 3/52, A01N 25/04, A01N 25/10

(54) **Holzschutzcreme**
Barrier cream for wood
Creme pour la protection du bois

(30) Priorität: 11.01.2005 DE 102005001244
(43) Veröffentlichungstag der Anmeldung: 12.07.2006
(73) Patentinhaber: Remmers Baustofftechnik GmbH, 49624 Löningen (DE)
(72) Erfinder: Janning, Friedrich, 49740 Andrup (DE); Büter, Marlies, 49777 Stavern (DE)
(74) Vertreter: Siekmann, Gunnar

(56) Entgegenhaltungen:
- EP-A- 0 915 140
- DATABASE WPI Week 198821 Derwent Publications Ltd., London, GB; AN 1988-142649 XP002379849 "Paste like anti-fungi and insecticidal material for wood - contains antifungal agent, insecticidal agent, surfactant and solvent of water and hydrocarbon" & JP 63 083002 A (SHINTO PAINT CO LTD) 13. April 1988 (1988-04-13)
- DATABASE WPI Week 198845 Derwent Publications Ltd., London, GB; AN 1986-295716 XP002379850 "High osmotic preservatives for timber - contg. fluid paraffin, n-paraffin and/or iso-paraffin, surfactants, organic solvents and medicinal components e.g. chlorine" & JP 61 218502 A (CHEMI HOLZ KK, OSHIKA SHINKO CO) 29. September 1986 (1986-09-29)

## Beschreibung

Die vorliegende Erfindung betrifft eine Holzschutzcreme in Form einer Wasser in Öl-Emulsion in pastöser Zubereitung zur Anwendung auf Holz und Holzwerkstoffen sowie deren Verwendung.

Genauer gesagt betrifft die Erfindung ein Holzschutzmittel in Cremeform, das vorbeugend und bekämpfend sowie auch als dekorativer Holzoberflächenschutz mit oder ohne biozide Zusatzstoffe und/oder Hydrophobierungs- und/oder Oleophobierungsmittel Verwendung finden kann.

Holzschutzmittel mit den verschiedensten Wirkstoffkomponenten sind in auf Wasser und/oder Lösemittel basierten Zusammensetzungen, welche beispielsweise aliphatische und/oder aromatische Kohlenwasserstoffe enthalten, bekannt. Diese weisen eine hohe Eindringtiefe auf, welche Voraussetzung für die Verhinderung der Fäulnis bzw. der Verrottung des zu behandelnden Holzes von innen heraus ist.

Solche dünnflüssigen Holzschutzmittel, welche Lösemittel enthalten oder auch lösemittelfreie Holzschutzsalzlösungen sowie Holzoberflächenschutzmittel weisen den Nachteil auf, dass sie Läufer und Tropfen bilden, welche nach dem Austrocknen ungleichmäßiges Aussehen auf dem Holz bilden und des Weiteren eine gleichmäßige Behandlung der Holzoberfläche erschweren. Darüber hinaus sind umfangreiche Abdeckarbeiten erforderlich, um nicht zu behandelnde Flächen vor einem Kontakt mit dem Holzschutzmittel zu schütze.

In den Druckschriften JP 63083002 A und JP 61218502 A werden pasteuse oder teigartige Holzschutzmittel beschrieben. Die EP 0915140 A1 beschreibt eine wasserverdünnbare Holzdekorlasur für den Innenbereich und ein Verfahren zur Herstellung. Hier wird eine Füllstoff-Pigmentpaste verwendet. Auch dabei handelt es sich um eine Festkörperdispersion in einer Flüssigkeit mit teigiger Konsistenz. Derartige Pasten bleiben nach dem Auftrag stehen und können einen gleichmäßigen Auftrag nicht bewirken.

Diese Nachteile sollen mit der vorliegenden Erfindung umgangen werden und es ist daher Aufgabe der vorliegenden Erfindung, ein leicht verarbeitbares Holzschutzmittel zur Verfügung zu stellen

Diese Aufgabe wird mit einer Holzschutzcreme mit den Merkmalen des Patentanspruchs 1 gelöst. Vorteilhafte Weiterentwicklungen sind in den Unteransprüchen angegeben.

Gegenstand der vorliegenden Erfindung ist eine Holzschutzcreme, basierend auf einer aus einer Ölphase und einer Wasserphase mit einem Emulgator gebildeten Emulsionscreme, die sich durch eine mittels einer Inline-EmulgierAnlage auf eine Eindringkraft von +10 g bis +60 g und eine Klebkraft von -55 g bis -5 g eingestellte Konsistenz kennzeichnet.

Ein solches Holzschutzmittel in Cremeform lässt sich ohne apparativen Aufwand auch über Kopf verarbeiten, z.B. durch Streichen und Rollen. Außerdem kann es im Spritzverfahren, z.B. mit Airlessanlagen, aufgebracht werden. Eine weitere Einbringtechnik stellt das sogenannte Bohriochverfahren dar.

Der größte Vorteil der Creme ist dadurch gegeben, dass sie nicht abläuft oder tropft und somit eine lange Verweilzeit auf der Holzoberfläche besitzt. Dadurch ist eine besonders hohe Eindringtiefe in dem zu behandelnden Holz bzw. Holzwerkstoff gewährleistet.

Eindringtiefe und Klebkraft werden mit dem Texture Analyser TA.XTexpress devon Stable Micro Systems, Vienna Court, Lammas Road, Godalming, Surrey GU7 1YL Großbritannien bestimmt.

Für die vorgenannte Ölphase werden vorzugsweise
- isoparaffinische Kohlenwasserstoffgemische im Bereich von C₁₁ - C₁₅ mit einem Siedebereich von 185 - 213°C und einem Flammpunkt von mehr als 60°C,
- entaromatisierte Kohlenwasserstoffe in Form eines Gemisches von n-, iso- und Cyclo-Aliphaten in einem Bereich von überwiegend Cg - C₁₁ und einem Siedebereich von 162 - 192°C und einem Flammpunkt von mehr als 40°C,
- isoparaffinische Kohlenwasserstoffgemische im Bereich von C₉ - C₁₂ und einem Siedebereich von 153 - 178°C und einem Flammpunkt von mehr als 40°C,
- allphatisch-aromatische Kohlenwasserstoffgemische, vornehmlich im Bereich von C₉ - C₁₂ und einem Siedebereich von 153 - 198°C sowie einem Flammpunkt von mehr als 40°C,
- aliphatisch-aromatische Kohlenwasserstoffgemische, vornehmlich im Bereich von C₁₀ - C₁₂ und einem Siedebereich von 180 - 210°C sowie einem Flammpunkt von mehr als 60°C,
- Gemische von n-, j- und Cyclo-Aliphaten, überwiegend im Bereich C₁₃ - C₁₇ mit einem Siedebereich von 238 - 257°C und einem Flammpunkt von mehr als 106°C,
- und/oder Alkydharzen ausgewählt.

Die Wasserphase enthält einen Emulgator, welcher nicht besonders beschränkt ist. Es können bekannte und übliche anionische, kationische und nichtionische Emulgatoren verwendet werden. Insbesondere für die erfindungsgemäße Creme sind nichtionische Emulgatoren bevorzugt. Beispiele für die Emulgatoren umfassen Polyvinylalkohole, Ethylenoxid-Propylenoxid-Blockcopolymere, Fettsäuren mit 6 bis 24 C-Atomen, Alkylpolyglykolside und polare Gruppen enthaltende lineare Organo-(poly)siloxane. Besonders bevorzugt sind Oxoalkoholpolyethylenglykolether mit 9 Ethylenoxid-Einheiten. Ein solcher Emulgator ist unter dem Handelsnamen Marlipal^{®} von der Firma Hüls erhältlich.

Als weitere Stoffe kann die erfindungsgemäße Holzschutzcreme kurz-, mittel- und/oder langölige Alkydharze als Bindemittel enthalten, zum Beispiel solche, wie sie von den Firmen Worlee oder Synthopol geliefert werden. Die erfindungsgemäße Holzschutzcreme kann des Weiteren Sikkative und/oder anorganische und/oder organische Pigmente enthalten, wenn sie als dekorative Holzschutzlasur Verwendung finden soll. Auch Acrylate können hier verwendet werden.

Die bioziden Wirkstoffe umfassen Insektizide, Fungizide und/oder Bakterizide, welche dem Biozidgesetz der Produktart 2 - Produktgruppe 8 zu entnehmen sind. Dazu gehören die Wirkstoffe Propiconazol und Flufenoxuron.

Die erfindungsgemäße Holzschutzcreme kann weitere Hilfsstoffe, wie Netzmittel, Dispersiermittel, Sikkative, Verdickungsmittel sowie Hydrophobierungs- oder Oliophobierungsmittel enthalten. Als Hydrophobierungsmittel werden vornehmlich Isooctylsilane, Alkylalkoxysiloxane oder Polysiloxane sowie Gemische hieraus verwendet.

Beispiele umfassen C₁-C₂₀-Alkyl-C₂-C₆-Alkoxysilane, wobei als Alkylreste insbesondere Methyl-, Ethyl-, Butyl-, Pentyl-, Hexyl- und/oder Heptylreste enthalten sein können, insbesondere in ihrer n- oder iso-Form. Die Alkylreste können auch Cycloalkylreste wie Cyclopentyl-, Cyclohexyl- und/oder Norbornylreste sein. Auch können die Alkylreste mit Fluor-, Chlor-, Brom- und Jodatomen substituiert sein.

Als Alkoxyreste können Ethoxy-, Propoxy-, Butoxy-, Pentoxy- und Hexyloxyreste enthalten sein, wieder insbesondere in ihren n- und iso-Formen, auch können die Alkylreste teilweise halogeniert sein.

Als Organopolysiloxane können alle in den zuvor genannten Silanen lösbaren Verbindungen verwendet werden. Die Organopolysiloxane können die gleichen Alkylreste wie die zuvor genannten Silane aufweisen.

Als oliophobierende Mittel sind die Fluor-Silane, Fluor-Siloxane und Fluor-Acryl-Copolymere zu nennen.

Die Erfindung umfasst auch ein Verfahren zur Herstellung der erfindungsgemäßen Holzschutzcreme, wobei eine in einem ersten Schritt aus den Komponenten (Ölphase/Wasserphase) erzeugte Emulsionscreme zur Erhöhung deren Konsistenz mit einer Inline-Emulgieranlage emulgiert wird.

Beispiele für erfindungsgemäße Zusammensetzungen sind nachfolgend wiedergegeben:

### 1) Dekorative Lasur

| | |
|---|---|
| 20 - 35% | Alkydharz, mittelölig |
| 1% | Sikkativ |
| 0,3% | Dispergiermittel |
| 1,2% | Verdickungsmittel (Bentone^{®}) |
| 0,25% | Netzmittel |
| 0-7% | Pigmente (anorg. Eisenoxid) |
| 20,00% | Wasser-Emulgator-Bemisch |
| add. 100% | lsopar^{®} |

Wie eingangs erwähnt, weisen flüssige Holzschutzmittel in der Praxis den wesentlichen Nachteil auf, dass sie schwer zu verarbeiten sind. Beim Auftragen auf senkrechten Flächen läuft das Holzschutzmittel ab, ohne dabei hinreichende Eindringtiefen im Holz zu erreichen. Dies erfordert üblicherweise ein mehrfaches Wiederholen des Auftragens. Bei der Applikation über Kopf kommt es zu starker Tropfenbildung. Auch ist die Auftragsmenge pro Flächeneinheit nur schwer kontrollierbar. Um eine hinreichende Schutzwirkung zu gewährleisten, wird üblicherweise ein deutlicher Überschuss an Holzschutzmittel und damit auch an Wirkstoffen aufgetragen.

Dies alles lässt sich mit der erfindungsgemäßen Holzschutzcreme vermeiden, die sich ohne Tropfenbildung und Ablaufen leicht durch Streichen, Rollen oder Spritzen im Airless-Verfahren gezielt im Bekämpfungs- oder Schutzbereich auch im Bohrlochverfahren verarbeiten lässt.

## Patentansprüche

1. Holzschutzcreme basierend auf einer aus einer Ölphase und einer Wasserphase mit einem Emulgator gebildeten Emulsionscreme, wobei folgende Zusammensetzung gegeben ist: 20-35 % Alkydharz mittelölig, 1 % Sikkativ, 0,3 % Dispergiermittel, 1,2 % Verdickungsmittel, 0,25 % Netzmittel, 0-7 % Pigmente (anorganisches Eisenoxid), 20 % Wasser-Emulgator-Gemisch, add. 100 % Isopar.

2. Holzschutzcreme nach Anspruch 1, **dadurch gekennzeichnet, dass** der Emulgator ein Oxoalkohol-polyethylenglykolether mit 9 Ethylenoxid-Einheiten ist.

3. Holzschutzcreme nach einem der Ansprüche 1 und 2, **dadurch gekennzeichnet, dass** sie wenigstens einen bioziden Wirkstoff enthält.

4. Holzschutzcreme nach Anspruch 3, **dadurch gekennzeichnet, dass** der wenigstens eine biozide Wirkstoff Insektizide, Fungizide und/oder Bakterizide umfasst.

5. Holzschutzcreme nach einem der Ansprüche 1 bis 4, **dadurch gekennzeichnet, dass** es ein Sikkativ enthält.

6. Holzschutzcreme nach einem der Ansprüche 1 bis 5, **dadurch gekennzeichnet, dass** es anorganische und/oder organische Pigmente und Farbstoffe umfasst.

7. Verwendung der Holzschutzcreme nach einem der Ansprüche 1 bis 6 zur Behandlung von Holz und Holzwerkstoffen.

## Claims

1. A wood preserving cream based on an emulsion cream formed of an oil phase and a water phase with an emulsifier, wherein the following composition is given: 20 to 35 % medium-oil alkyd resin, 1 % siccative, 0.3 % dispersant, 1.2 % thickening agent, 0.25 % wetting agent, 0 to 7 % pigments (inorganic iron oxide), 20 % water-emulsifier mixture, made up to 100 % with Isopar.

2. The wood preserving cream according to claim 1, **characterised in that** the emulsifier is an oxoalcohol polyethylene glycol ether having 9 ethylene oxide units.

3. The wood preserving cream according to any one of claims 1 and 2, **characterised in that** it contains at least one biocidal active substance.

4. The wood preserving cream according to claim 3, **characterised in that** the at least one biocidal active susbstance includes insecticides, fungicides and/or bactericides.

5. The wood preserving cream according to any one of claims 1 to 4, **characterised in that** it contains a siccative.

6. The wood preserving cream according to any one of claims 1 to 5, **characterised in that** it comprises inorganic and/or organic pigments and dyes.

7. A use of the wood preserving cream according to any one of claims 1 to 6 for the treatment of wood and wood materials.

## Revendications

1. Crème de protection du bois, basée sur une crème d'émulsion formée à partir d'une phase huileuse et d'une phase aqueuse avec un émulsifiant, la composition étant comme suit : 20 à 35 % de résine alkyde moyenne en huile, 1 % de siccatif, 0,3 % d'agent dispersant, 1,2 % d'agent épaississant, 0,25 % d'agent mouillant, 0 à 7 % de pigments (oxyde de fer inorganique), 20 % de mélange eau-émulsifiant, add. 100 % d'Isopar.

2. Crème de protection du bois selon la revendication 1, **caractérisé en ce que** ledit émulsifiant est un éther d'alcool oxo / de polyéthylène glycol ayant 9 unités oxyde d'éthylène.

3. Crème de protection du bois selon l'une des revendications 1 ou 2, **caractérisé en ce qu'**elle contient au moins un principe actif biocide.

4. Crème de protection du bois selon la revendication 3, **caractérisé en ce que** l'au moins un principe actif biocide comprend des insecticides, des fongicides et/ou des bactéricides.

5. Crème de protection du bois selon l'une des revendications 1 à 4, **caractérisé en ce qu'**il contient un siccatif.

6. Crème de protection du bois selon l'une des revendications 1 à 5, **caractérisé en ce qu'**il comprend des pigments et colorants inorganiques et/ou organiques.

7. Utilisation de la crème de protection du bois selon l'une des revendications 1 à 6 pour traitement du bois et des matériaux en bois.
